# EUROPÄISCHE PATENTSCHRIFT

(11) **EP 1 737 638 B1**
(45) Veröffentlichungstag und Bekanntmachung des Hinweises auf die Patenterteilung: **03.06.2009**
(21) Anmeldenummer: 05742780.9
(22) Anmeldetag: 19.04.2005
(51) Int. Cl.: B29C 45/14

(54) **VERFAHREN ZUM HERSTELLEN EINES DICHT- ODER ZIERSTREIFENS, INSBESONDERE FÜR EIN KRAFTFAHRZEUG, SOWIE EIN SOLCHER DICHT- ODER ZIERSTREIFEN**
METHOD FOR PRODUCING A SEALING OR DECORATIVE STRIP, IN PARTICULAR, FOR A MOTOR VEHICLE AND SAID SEALING OR DECORATIVE STRIP
PROCEDE DE FABRICATION D'UNE BANDE D'ETANCHEITE OU DECORATIVE, EN PARTICULIER POUR UN VEHICULE AUTOMOBILE, ET BANDE D'ETANCHEITE OU DECORATIVE DE CE TYPE

(30) Priorität: 20.04.2004 DE 102004019116
(43) Veröffentlichungstag der Anmeldung: 03.01.2007
(73) Patentinhaber: Metzeler Automotive Profile Systems GmbH, 88131 Lindau/Bodensee (DE)
(72) Erfinder: POPPELE, Christoph, 88131 Lindau/Bodensee (DE); LUTZE, Thomas, 88131 Lindau/ Bodensee (DE); GRAF, Oliver, 87437 Kempten (DE)
(74) Vertreter: Schober, Christoph D.
(86) Internationale Anmeldenummer: PCT/EP2005/051728
(87) Internationale Veröffentlichungsnummer: WO 2005/102651

(56) Entgegenhaltungen:
- EP-A- 0 704 597
- DE-C1- 3 644 283
- US-A- 4 619 847
- PATENT ABSTRACTS OF JAPAN Bd. 012, Nr. 105 (M-681), 6. April 1988 (1988-04-06) & JP 62 234909 A (TOYODA GOSEI CO LTD), 15. Oktober 1987 (1987-10-15)

## Beschreibung

Die Erfindung betrifft ein Verfahren zum Herstellen eines Dicht- oder Zierstreifens. Die Erfindung bezieht sich ferner auf einen Dicht- oder Zierstreifen, der insbesondere für ein Kraftfahrzeug Anwendung findet. Der Dicht- oder Zierstreifen ist mit einem ersten Bauteil, das aus einem elastomeren Werkstoff extrudiert ist und einen Endabschnitt aufweist, und einem zweiten Bauteil, das stoffschlüssig mit dem Endabschnitt verbunden ist, versehen. Der Endabschnitt weist eine Oberseite und eine Unterseite, die sich in einer Längsrichtung erstrecken, und eine Stirnseite, die sich in einer Querrichtung erstreckt, auf. Die Stirnseite bildet zumindest einen Teil einer Fügefläche, an der das erste Bauteil und das zweite Bauteil aneinandergrenzen. Der Endabschnitt ist zur Vergrößerung der Fügefläche mit einer Aussparung versehen. Das zweite Bauteil weist einen Vorsprung auf, der in die Aussparung eingreift.

Die DE 36 44 283 C1 beschreibt eine Dichtung für ein Cabriolet-Verdeck, die sich aus zwei Dichtungsabschnitten zusammensetzt. Die Dichtungsabschnitte sind mittels eines Haltestifts an einer Halteschiene befestigt und weisen Stirnseiten auf, die aneinander zugewandt sind. An der Stirnseite des ersten Dichtungsabschnitts ist eine Kugelpfanne angeordnet, die mit einer konkaven Kontaktfläche versehen ist. Demgegenüber ist an der Stirnseite des zweiten Dichtungsabschnitts ein Endstück angeordnet, das eine konvexe Kontaktfläche aufweist, die an die Kontaktfläche der Stirnseite des ersten Dichtungsabschnitts angepasst ist. Die Kugelpfanne und das Endstück bilden auf diese Weise ein Gelenk, das es ermöglicht, die Dichtungsabschnitte in einem Winkel anzuordnen und damit an einen gekrümmten Verlauf des Cabriolet-Verdecks anzupassen. Die Kugelpfanne und das Endstück können in einen Hohlraum der Dichtungsabschnitte eingesetzt oder durch Kleben, Vulkanisieren oder dergleichen mit den Dichtungsabschnitten verbunden werden.

Eine Dichtungsanordnung, die zum Abdichten und Führen einer bewegbaren Fensterscheibe eines Kraftfahrzeugs dient, wird in der EP 0 704 597 A2 beschrieben. Die Dichtungsanordnung weist einen Dichtstreifen auf, der aus einem elastomeren Werkstoff extrudiert ist und an einer die Fensterscheibe einfassenden Einfassung befestigt ist. Die Einfassung setzt sich aus einem Schachtabschnitt, der im Bereich eines Fensterschachts, in den sich die Fensterscheibe versenken lässt, angeordnet ist, einem Führungsabschnitt, der die Fensterscheibe seitlich führt, und einem Aufnahmeabschnitt, der die Oberkante der Fensterscheibe aufnimmt, zusammen. Der Dichtstreifen bildet eine geschlossene Rahmendichtung, die sich entlang des Schachtabschnitts, des Führungsabschnitts und des Aufnahmeabschnitts erstreckt. Der Dichtstreifen weist einen ersten Endabschnitt und einen zweiten Endabschnitt auf. Der erste Endabschnitt ist innerhalb des Fensterschachts angeordnet. Der zweite Endabschnitt überlappt den Dichtstreifen in einem Übergangsbereich von dem Führungsabschnitt auf den Schachtabschnitt. Im Unterschied zu dem ersten Endabschnitt ist der zweite Endabschnitt von außen sichtbar und aus diesem Grund mit einer Endkappe versehen, die den Dichtstreifen abschließt.

Ein Verfahren zur Herstellung einer Zierleiste, die mit einer spritzgegossenen Endkappe versehen ist, ist außerdem aus der US 4,619,847 bekannt. Das Verfahren sieht vor, an einem Endabschnitt der Zierleiste wenigstens einen Finger auszuformen, der im Anschluss in eine Spritzgussform gelegt wird, in der die Endkappe spritzgegossen wird. Das Ausformen des Fingers geschieht mittels Bandstahlmessern. Die Zierleiste als solches wird durch Strangpressen eines thermoplastischen Materials gefertigt.

Die Endkappe wird üblicherweise durch Spritzgießen gefertigt und dabei stoffschlüssig mit dem Dichtstreifen verbunden. Als nachteilig hat sich hierbei eine unzureichende Haftung der Endkappe an dem Dichtstreifen herausgestellt, welche die Lebensdauer beeinträchtigt.

Das zuvor beschriebene Problem einer unzureichenden Haftung ergibt sich nicht nur bei der Herstellung einer geschlossenen Rahmendichtung, sondern generell dann, wenn ein erstes Bauteil mit einem zweiten Bauteil durch Spritzgießen verbunden wird.

Der Erfindung liegt die **Aufgabe** zugrunde, ein Verfahren zum Herstellen eines Dicht- oder Zierstreifens zu schaffen, durch das sich eine zuverlässige und langlebige Verbindung zweier Bauteile erzielen lässt. Zudem soll ein entsprechender Dicht- oder Zierstreifen angegeben werden.

Diese Aufgabe wird durch ein Verfahren gemäß Anspruch 1 und einen Dicht- oder Zierstreifen gemäß Anspruch 6 **gelöst.** Vorteilhafte Ausgestaltungen der Erfindung werden in den Ansprüchen 2 bis 5, 7 und 8 definiert.

Der Erfindung liegt die Erkenntnis zugrunde, dass sich die Aussparung beim Spritzgiessen mit Formmasse füllt, die einen in die Aussparung eingreifenden Vorsprung bildet. Der Vorsprung vergrössert die wirksame Fügefläche und trägt somit zu einer zuverlässigen Verbindung von erstem Bauteil und zweitem Bauteil bei. In Abhängigkeit von der Orientierung des Hohlraums kann der Vorsprung zudem einen Formschluss zwischen dem ersten Bauteil und dem zweiten Bauteil bewirken. Der zweckmässigerweise hakenförmig ausgestaltete Halteabschnitt dient zur Befestigung des Dicht- oder Zierstreifens. Der in die Aussparung eingreifende Vorsprung ist an dem Halteabschnitt angeordnet und gewährleistet auf diese Weise einen Formschluss zwischen dem ersten Bauteil und dem zweiten Bauteil in der Längsrichtung.

So ist es in Hinsicht auf eine einfache und kostengünstige Herstellung von Vorteil, die Aussparung durch Bohren, Fräsen, Stanzen oder Sägen zu fertigen.

Bevorzugt ist der erste Werkstoff Ethylen-Propylen-Dien-Kautschuk (EPDM), um ein praxisgerechtes Extrudieren zu gewährleisten. Demgegenüber handelt es sich bei dem zweiten Werkstoff zweckmässigerweise um ein thermoplastisches Elastomer (TPE), das ein praxisgerechtes Spritzgiessen ermöglicht.

In einer bevorzugten Ausgestaltung der Erfindung ist das erste Bauteil eine Dichtung und das zweite Bauteil eine die Dichtung an dem Endabschnitt abschliessende Endkappe.

Einzelheiten und weitere Vorteile der vorliegenden Erfindung ergeben sich aus der nachfolgenden Beschreibung eines bevorzugten Ausführungsbeispiels. In den das Ausführungsbeispiel lediglich schematisch darstellenden Zeichnungen veranschaulichen im einzelnen:
- Fig. 1: eine Seitenansicht eines Kraftfahrzeugs;
- Fig. 2: einen Schnitt gemäss der Linie II in Fig. 1, der eine Dichtung zeigt;
- Fig. 3: eine perspektivische Ansicht einer Dichtung, und
- Fig. 4: eine perspektivische Ansicht gemäss Fig. 3, welche die mit ei- ner Endkappe versehene Dichtung zeigt, und
- Fig. 5: eine Ansicht von unten auf die mit der Endkappe versehene Dichtung.

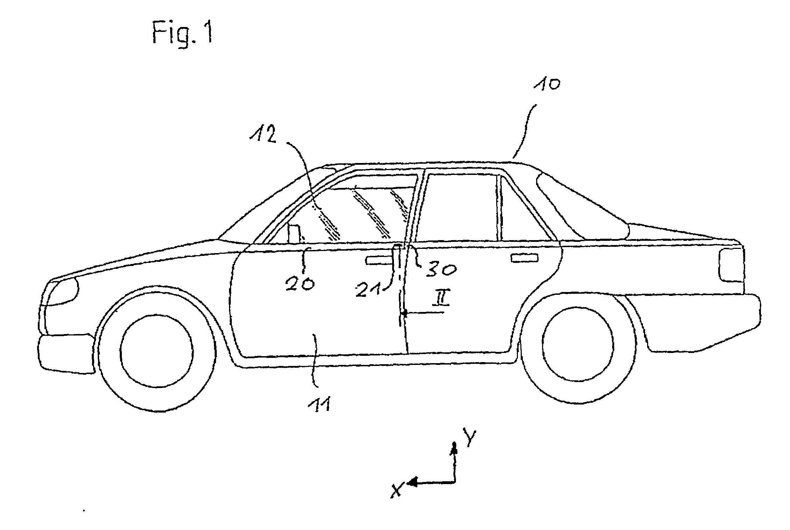

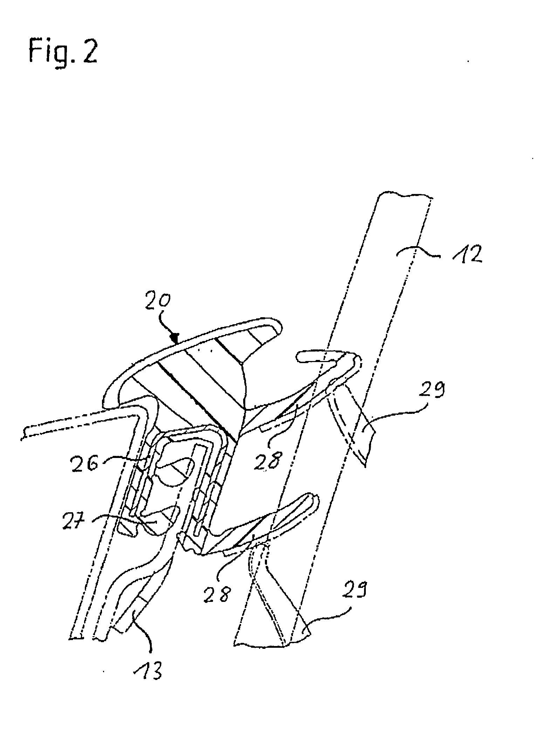

Das in Fig. 1 gezeigte Kraftfahrzeug 10 ist im Bereich einer Tür 11 mit einer durch einen Elektromotor angetriebenen Fensterscheibe 12 versehen. Die Fensterscheibe 12 lässt sich in einen Fensterschacht der Tür 11 versenken. Wie insbesondere aus Fig. 2 ersichtlich ist, wird die Fensterscheibe 12 entlang der Öffnung des Fensterschachts durch eine Dichtung 20 abgedichtet.

Die Dichtung 20 ist aus einem elastomeren Werkstoff, beispielsweise EPDM, extrudiert und weist einen im Querschnitt annähernd U-förmigen Befestigungsabschnitt auf. Der Befestigungsabschnitt ist auf einen äusseren Flansch 13 des Fensterschachts aufgesteckt und wird durch einen metallenen Verstärkungsträger 26 armiert. Zudem weist der Befestigungsabschnitt Haltelippen 27 auf, die eine zuverlässige Befestigung der Dichtung 20 an dem Flansch 13 gewährleisten. Die Dichtung 20 weist ausserdem Dichtlippen 28 auf, die an einer Aussenfläche der Fensterscheibe 12 anliegen und auf Grund der bewegbaren Anordnung der Fensterscheibe 12 mit einer reibungsvermindernden Beschichtung oder Beflockung versehen sind. Fig. 2 gibt überdies zu erkennen, dass an einer Innenfläche der Fensterscheibe 12 Dichtlippen 29 anliegen, die Bestandteil einer nicht dargestellten Dichtung, die den Fensterschacht von innen abdichtet, sind.

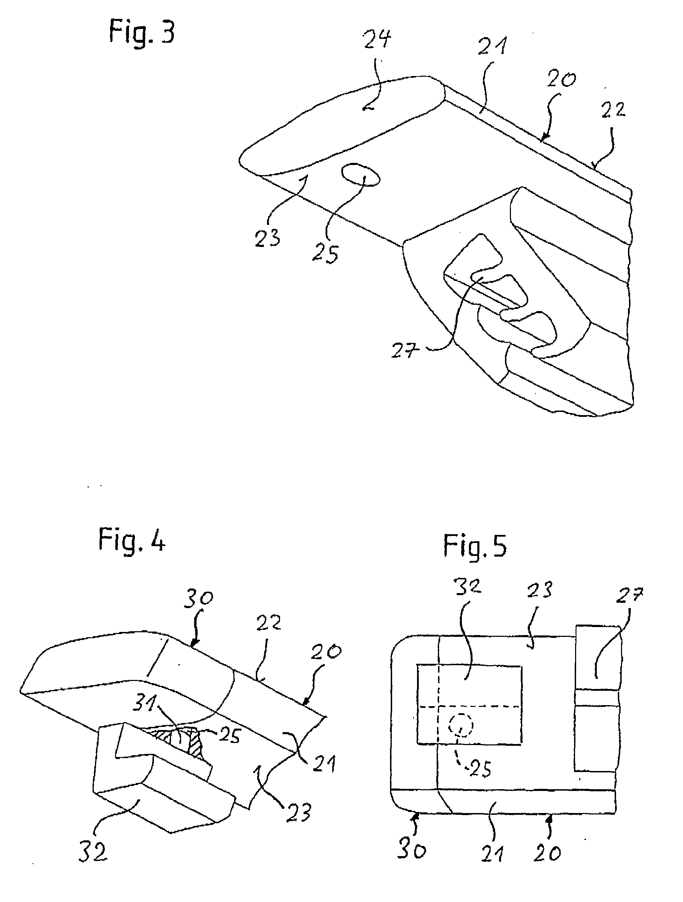

Weiterhin ist die Dichtung 20 im Bereich eines Endabschnitts 21 mit einer Aussparung 25 versehen, die im Querschnitt kreisförmig ist. Die Fig. 3 und 4 geben zudem zu erkennen, dass der Endabschnitt 21 eine Oberseite 22, eine Unterseite 23 und eine Stirnseite 24 aufweist. Die Oberseite 22 und die Unterseite 23 erstrecken sich in einer Längsrichtung x, wohingegen sich die Stirnseite 24 in einer Querrichtung y, die orthogonal zu der Längsrichtung x ist, erstreckt. Die beispielsweise durch Bohren gefertigte Aussparung 25 erstreckt sich in der Querrichtung y.

Wie insbesondere Fig. 4 zu erkennen gibt, ist an dem Endabschnitt 21 eine die Dichtung 20 abschliessende Endkappe 30 angeordnet. Die aus einer Formmasse, die beispielsweise aus TPE oder ebenfalls aus EPDM besteht, spritzgegossene Endkappe 30 ist stoffschlüssig mit dem Endabschnitt 21 verbunden und grenzt an die Stirnseite 24 an. Die Endkappe 30 weist einen hakenförmigen Halteabschnitt 32 auf, der an die Unterseite 23 des Endabschnitts 21 angrenzt und zur zusätzlichen Befestigung der Dichtung 20 an dem Flansch 13 dient.

Formmasse, die beim Spritzgiessen der Endkappe 30 in die Aussparung 25 eindrang, bildet einen in den Aussparung 25 eingreifenden Vorsprung 31, wie in Fig. 4 zu erkennen ist. Die Innenfläche der Aussparung 25 bildet folglich zusammen mit der Stirnseite 24 eine Fügefläche zwischen der Dichtung 20 und der Endkappe 30. Im Unterschied zu herkömmlichen Dichtungen vergrössert die Innenfläche der Aussparung 25 die wirksame Fügefläche und trägt somit zu einem zuverlässigen Stoffschluss zwischen der Dichtung 20 und der Endkappe 30 bei.

### Bezugszeichenliste

- 10: Kraftfahrzeug
- 11: Tür
- 12: Fensterscheibe
- 13: Flansch

- 20: Dichtung
- 21: Endabschnitt
- 22: Oberseite
- 23: Unterseite
- 24: Stirnseite
- 25: Aussparung
- 26: Verstärkungsträger
- 27: Haltelippe
- 28: Dichtlippe
- 29: Dichtlippe

- 30: Endkappe
- 31: Vorsprung
- 32: Halteabschnitt

- x: Längsrichtung
- y: Querrichtung

## Patentansprüche

1. Verfahren zum Herstellen eines Dicht- oder Zierstreifens, insbesondere für ein Kraftfahrzeug (10), der ein erstes Bauteil (20) und ein zweites Bauteil (30) aufweist, die stirnseitig aneinandergrenzen, mit folgenden Verfahrensschritten:
a) Extrudieren eines ersten Bauteils (20) aus einem ersten Werkstoff;
b) Versehen des ersten Bauteils (20) mit einem Endabschnitt (21), der eine Oberseite (22) und eine Unterseite (23), die sich in einer Längsrichtung (x) erstrecken, und eine Stirnseite (24), die sich in einer Querrichtung (y) erstreckt, aufweist;
c) Versehen des Endabschnitts (21) mit einer Aussparung (25), die sich in der Querrichtung (y) erstreckt und an der Unterseite (23) mündet;
d) Spritzgiessen eines zweiten Bauteils (30) mittels einer Formmasse, die aus einem zweiten Werkstoff besteht, derart, dass das zweite Bauteil (30) mit einem Halteabschnitt (32), der an die Unterseite (23) des Endabschnitts (21) angrenzt, versehen wird und die Formmasse in die Aussparung (25) zur Bildung eines von dem Halteabschnitt (32) in die Aussparung (25) ragenden Vorsprungs eindringt;
e) wobei während des Spritzgiessens das erste Bauteil (20) stoffschlüssig mit dem zweiten Bauteil (30) verbunden wird und der in die Aussparung (25) eingreifende Vorsprung einen Formschluß zwischen dem ersten Bauteil (20) und dem zweiten Bauteil (30) in der Längsrichtung (x) erzeugt.

2. Verfahren nach Anspruch 1, **dadurch gekennzeichnet, dass** die Aussparung (25) durch Bohren, Fräsen, Stanzen oder Sägen gefertigt wird.

3. Verfahren nach Anspruch 1 oder 2, **dadurch gekennzeichnet, dass** der erste Werkstoff Ethylen-Propylen-Dien-Kautschuk ist.

4. Verfahren nach einem der Ansprüche 1 bis 3, **dadurch gekennzeichnet, dass** der zweite Werkstoff ein thermoplastisches Elastomer ist.

5. Verfahren nach einem der Ansprüche 1 bis 4, **dadurch gekennzeichnet, dass** das erste Bauteil als Dichtung (20) und das zweite Bauteil als eine die Dichtung (20) an dem Endabschnitt (21) abschliessende Endkappe (30) ausgestaltet wird.

6. Dicht- oder Zierstreifen, insbesondere für ein Kraftfahrzeug (10), mit einem ersten Bauteil (20), das aus einem elastomeren Werkstoff extrudiert ist und einen Endabschnitt (21) aufweist, und einem zweiten Bauteil (30), das stoffschlüssig mit dem Endabschnitt (21) durch Spritzgiessen verbunden ist, wobei der Endabschnitt (21) eine Oberseite (22) und eine Unterseite (23), die sich in einer Längsrichtung (x) erstrecken, und eine Stirnseite (24), die sich in einer Querrichtung (y) erstreckt, aufweist, wobei die Stirnseite (24) zumindest einen Teil einer Fügefläche bildet, an der das erste Bauteil (20) und das zweite Bauteil (30) aneinandergrenzen, wobei der Endabschnitt (21) zur Vergrösserung der Fügefläche mit einer Aussparung (25) versehen ist und wobei das zweite Bauteil (30) einen Vorsprung (31) aufweist, der in die Aussparung (25) eingreift, **dadurch gekennzeichnet, dass** das zweite Bauteil (30) einen Halteabschnitt (32) aufweist, der an die Unterseite (23) des End-abschnitts (21) angrenzt, und dass sich die Aussparung (25) in der Querrichtung (y) erstreckt und an der Unterseite (23) mündet, wobei der Vorsprung (31) an dem Halteabschnitt (32) angeordnet ist.

7. Dicht- oder Zierstreifen nach Anspruch 6, **dadurch gekennzeichnet, dass** der Halteabschnitt (32) hakenförmig ist.

8. Dicht- oder Zierstreifen nach Anspruch 6 oder 7, **dadurch gekennzeichnet, dass** das erste Bauteil eine Dichtung (20) und das zweite Bauteil eine die Dichtung (20) an dem Endabschnitt (21) abschliessende Endkappe (30) ist.

## Claims

1. Method for producing a sealing or decorative strip, in particular, for a motor vehicle (10) comprising a first constructional element (20) and a second constructional element (30) adjoining at the front face having the following procedural steps:
(a) extrusion of a first constructional element (20) from a first material;
(b) provision of the first constructional element (20) with an end section (21) having an upper face (22) and a lower face (23) extending in a longitudinal direction (x), and a front face (24) extending in a transverse direction (y);
(c) provision of the end section (21) with a recess (25) extending in the transverse direction (y) and opening to the lower face (23);
(d) injection moulding of a second constructional element (30) using a moulding material made of a second material so that the second constructional element (30) has a fixing section (32) which abuts against the lower face (23) of the end section (21) and the moulding material extends into the recess (25) to form a protrusion projecting from the fixing section (32) into the recess (25);
(e) wherein, during the injection moulding process, the first constructional element (20) is positively connected to the second constructional element (30) and the protrusion engaging in the recess (25) achieves a positive locking of the first and second constructional elements (25, 30) in the longitudinal direction (x).

2. Method according to claim 1 **characterised in that** the recess (25) is produced by boring, milling, stamping or cutting.

3. Method according to claim 1 or 2 **characterised in that** the first material is ethylene propylene diene rubber.

4. Method according to one of the claims 1 to 3 **characterised in that** the second material is a thermoplastic elastomer.

5. Method according to one of the claims 1 to 4 **characterised in that** the first constructional element is configured as a seal (20) and the second constructional element as an end cap (30) closing the end section (21) of the seal (20).

6. Sealing or decorative strip, in particular, for a motor vehicle (10) having a first constructional element (20) extruded from an elastomer material and provided with an end section (21), and a second constructional element (30) positively connected by injection moulding to the end section (21), wherein the end section (21) has an upper face (22) and a lower face (23) extending in a longitudinal direction (x) and a front face (24) extending in a transverse direction (y), and wherein the said front face (24) forms at least one part of a joint surface at which the first constructional element (20) abuts with the second constructional element (30), wherein the end section (21) is provided with a recess (25) to extend the joint surface and the second constructional element (30) is provided with a protrusion (31) which engages in the recess (25) **characterised in that** the second constructional element (30) has a fixing section (32) which abuts against the lower face (23) of the end section (21) and that the recess (25) extends in a transverse direction (y) and opens to the lower face (23), wherein the protrusion (31) is positioned on the fixing section (32).

7. Sealing or decorative strip according to claim 6 **characterised in that** the fixing section (32) is hook-shaped.

8. Sealing or decorative strip according to claims 6 or 7 **characterised in that** the first constructional element forms a seal (20) and the second constructional element forms an end cap (30) closing the seal (20) at the end section (21).

## Revendications

1. Procédé de fabrication d'une bande d'étanchement ou de décoration, en particulier pour un véhicule automobile (10), qui comprend un premier composant (20) et un second composant (30), qui sont mutuellement juxtaposés du côté frontal, avec les étapes de procédé suivantes :
a) extrusion d'un premier composant (20) à partir d'un premier matériau ;
b) réalisation du premier composant (20) avec un tronçon terminal (21) qui présente une face supérieure (22) et une face inférieure (23) qui s'étendent dans une direction longitudinale (x), et une face frontale (24) qui s'étend dans une direction transversale (y) ;
c) réalisation dans le tronçon terminal (21) d'un évidement (25) qui s'étend dans la direction tranversale (y) et qui débouche à la face inférieure (23) ;
d) moulage par injection d'un second composant (30) au moyen d'une masse à modeler qui est constituée en un second matériau, de telle façon que le second composant (30) est doté d'un tronçon de maintien (32) qui est adjacent à la face inférieure (23) du tronçon terminal (21), et la masse à modeler pénètre dans l'évidement (25) pour réaliser une saillie qui dépasse du tronçon de maintien (32) jusque dans l'évidement (25) ;
e) dans lequel, pendant le moulage par injection, le premier composant (20) est relié par coopération de matière au second composant (30), et la saillie qui pénètre dans l'évidement (25) établit une coopération de formes entre le premier composant (20) et le second composant (30) en direction longitudinale (x).

2. Procédé selon la revendication 1, **caractérisé en ce que** l'évidement (25) est réalisée par perçage, fraisage, poinçonnage, ou par sciage.

3. Procédé selon la revendication 1 ou 2, **caractérisé en ce que** le premier matériau est un caoutchouc éthylène-propylène-diène.

4. Procédé selon l'une des revendications 1 à 3, **caractérisé en ce que** le second matériau est un élastomère thermoplastique.

5. Procédé selon l'une des revendications 1 à 4, **caractérisé en ce que** le premier composant est conçu à la manière d'un joint (20), et le second composant est conçu à la manière d'un capuchon d'extrémité (30) qui referme le joint (20) au niveau du tronçon terminal (21).

6. Bande d'étanchement ou de décoration, en particulier pour un véhicule automobile (10), comprenant un premier composant (20) qui est extrudé à partir d'un matériau élastomère et qui présente un tronçon terminal (21), et un second composant (30) qui est relié par moulage par injection au tronçon terminal (21) par coopération de matière, ledit tronçon terminal (21) comportant une face supérieure (22) et une face inférieure (23) qui s'étendent en direction longitudinale (x) et une face frontale (24) qui s'étend en direction transversale (y), ladite face frontale (24) formant au moins une partie d'une surface de jointure au niveau de laquelle le premier composant (20) et le second composant (30) sont mutuellement adjacents, ledit tronçon terminal (21) étant pourvu d'un évidement (25) pour augmenter la surface de jointure, et dans laquelle le second composant (30) comporte une saillie (31) qui s'engage dans l'évidement (25), **caractérisée en ce que** le second composant (30) comporte un tronçon de maintien (32) qui est adjacent à la face inférieure (23) du tronçon terminal (21), et **en ce que** l'évidement (25) s'étend en direction transversale (y) et débouche à la face inférieure (23), ladite saillie (31) étant agencée au niveau du tronçon de maintien (32).

7. Bande d'étanchement ou de décoration selon la revendication 6, **caractérisée en ce que** le tronçon de maintien (32) est en forme de crochet.

8. Bande d'étanchement ou de décoration selon la revendication 6 ou 7, **caractérisée en ce que** le premier composant est un joint (20) et le second composant est un capuchon d'extrémité (30) qui referme le joint (20) au niveau du tronçon terminal (21).
